# EUROPÄISCHE PATENTSCHRIFT

(11) **EP 2 636 849 B1**
(45) Veröffentlichungstag und Bekanntmachung des Hinweises auf die Patenterteilung: **01.11.2017**
(21) Anmeldenummer: 12001501.1
(22) Anmeldetag: 05.03.2012
(51) Int. Cl.: F02C 7/28, F01D 9/04, F01D 11/00

(54) **Verdichter**
Compressor
Compresseur

(43) Veröffentlichungstag der Anmeldung: 11.09.2013
(73) Patentinhaber: MTU Aero Engines AG, 80995 München (DE)
(72) Erfinder: Kern, Felix, 85386 Eching (DE); Kraus, Jürgen, Dr., 85757 Karlsfeld (DE)
(74) Vertreter: Schlotter, Alexander Carolus Paul

(56) Entgegenhaltungen:
- EP-A1- 1 635 039
- EP-A2- 2 093 380
- WO-A1-93/16275
- WO-A1-2007/134585
- WO-A1-2011/045128
- DE-A1-102007 015 669

## Beschreibung

Die vorliegende Erfindung betrifft einen Verdichter, insbesondere für ein Flugtriebwerk, mit einem Leitgitter mit einem Innenring und einem daran befestigten Dichtungsträger, ein Verfahren zum Befestigen des Dichtungsträgers an dem Innenring eines solchen Verdichters, sowie einen Innenring, einen Dichtungsträger sowie ein Spannelement für einen solchen Verdichter.

Insbesondere aus der eigenen WO 2007/134585 A1 ist ein Verdichter mit einem Innenring und einem daran befestigten Dichtungsträger eines Leitgitters bekannt. Auf die Offenbarung dieser WO 2007/134585 A1 wird vollinhaltlich Bezug genommen und ihr Inhalt auch zum Inhalt der vorliegenden Anmeldung gemacht.

Zwischen Innenring und Dichtungsträger kann aufgrund von Fertigungstoleranzen ein Axial- und/oder ein Radialspalt vorhanden sein.

Zur Sicherung eines Dichtungsträgers an einem Innenring schlägt die DE 10 2007 015 669 A1 ein in den Innenring integriertes, federbelastetes Sicherungselement mit einem Vorsprung vor, der in eine Ausnehmung des Dichtungsträgers eingreift.

Aufgabe der vorliegenden Erfindung ist es, einen Verdichter mit einem Innenring und einem daran befestigten Dichtungsträger zur Verfügung zu stellen.

Zur Lösung dieser Aufgabe ist ein Verdichter nach dem Oberbegriff des Anspruchs 1 durch die kennzeichnenden Merkmale des Anspruchs 1 weitergebildet. Anspruch 8 stellt ein Verfahren zum Befestigen des Dichtungsträgers an dem Innenring eines solchen Verdichters unter Schutz. Die Unteransprüche betreffen vorteilhafte Weiterbildungen.

Ein Verdichter nach der vorliegenden Erfindung, insbesondere ein Turboverdichter, vorzugsweise ein Gasturbinenverdichter, insbesondere ein Flugtriebwerkverdichter, weist wenigstens ein Leitgitter auf. Weist der Verdichter in einer bevorzugten Ausführung mehrere Leitgitter auf, können ein, mehrere und insbesondere alle Leitgitter wie nachfolgend beschrieben ausgebildet sein.

Ein Leitgitter weist einen Innenring auf, an dem vorzugsweise Leitschaufeln fest oder verstellbar befestigt sind. Insbesondere auf einer solchen Schaufeln gegenüberliegenden und/oder radial inneren Seite des Innenrings ist an diesem ein Dichtungsträger befestigt, der vorzugsweise auf seiner radial inneren Seite eine Dichtungsfläche, insbesondere einen Anstreif- bzw. Einlaufbelag aufweisen kann. Vorzugsweise kann der Innenring und/oder der Dichtungsträger segmentiert sein. Die Begriffe "axial", "radial" und "Umfang" beziehen sich vorliegend insbesondere in fachüblicher Weise auf eine Rotationsachse des Verdichters ("axial"), eine Achse, die senkrecht auf der Rotationsachse steht ("radial") bzw. eine Tangetialrichtung senkrecht zur axialen und radialen Richtung.

Der Dichtungsträger ist vorzugsweise lösbar an dem Innenring befestigt.

Insbesondere zur axialen Befestigung weist der Dichtungsträger nach einem ersten Aspekt der vorliegenden Erfindung zwei einander gegenüberliegende, insbesondere parallele, Dichtungsträger-Stirnflächen auf. Der Innenring weist zwei Innenring-Stirnflächen auf, die diesen Dichtungsträger-Stirnflächen zugewandt und zwischen den Dichtungsträger-Stirnflächen mit einem Axialspalt aufgenommen sind. Insbesondere kann eine Innenring-Stirnfläche an einer Dichtungsträger-Stirnfläche anliegen und die andere Innenring-Stirnfläche der anderen Dichtungsträger-Stirnfläche axial gegenüberliegen und von dieser durch den Axialspalt beabstandet sein.

Insbesondere, um den Dichtungsträger axial spielfrei an dem Innenring zu befestigen, sind ein oder mehrere, vorzugsweise über den Umfang, insbesondere äquidistant, verteilte Spannelemente zwischen Innenring und Dichtungsträger axial elastisch verspannt.

Hierzu stützen sich das bzw. die Spannelemente vorzugsweise an einer Gegenstirnfläche des Innenring, insbesondere einem Absatz oder Boden einer Aussparung in einer Innenring-Stirnfläche, mit einer ersten Spannelement-Stirnfläche und an einer Gegenstirnfläche des Dichtungsträgers, insbesondere einer Dichtungsträger-Stirnfläche, mit einer zweiten Spannelement-Stirnfläche axial ab.

Vorzugsweise ist die Summe des, insbesondere maximalen, axialen Abstands zwischen diesen beiden Spannelement-Stirnfläche des unverformten bzw. nicht verspannten Spannelements und des, insbesondere maximalen, axialen Abstands zwischen der Gegenstirnfläche des Innenrings und der der Gegenstirnfläche des Dichtungsträgers ferneren Innenring-Stirnfläche größer als der, insbesondere maximale, axiale Abstand zwischen den beiden Dichtungsträger-Stirnflächen.

Wenn also in einer bevorzugten Ausführung ein Spannelement teilweise in einer Aussparung in einer Innenring-Stirnfläche aufgenommen ist und sich in dieser an deren Boden oder einem Absatz der Aussparung axial abstützt, der damit eine Gegenstirnfläche des Innenrings definiert, so ragt das unverformte bzw. nicht verspannte Spannelement um mehr als das Axialspiel aus dieser Aussparung über die Innenring-Stirnfläche hervor und wird elastisch in axialer Richtung komprimiert, wenn der Innenring mit eingesetztem Spannelement zwischen den Dichtungsträger-Stirnflächen aufgenommen ist.

Erfindungsgemäß weisen ein oder mehrere Spannelement-Stirnflächen jeweils eine Auflaufschräge gegen die axiale Richtung auf. Unter einer Anlaufschräge gegen die axiale Richtung wird insbesondere eine Fläche verstanden, deren axialer Abstand zu einer Normalebene, die senkrecht auf der axialen Richtung steht, in Umfangsrichtung zunimmt, so dass eine Verdrehung der Auflaufschräge in Umfangsrichtung um die Rotationsachse ihren axialen Abstand in einer Ebene, in der die axiale Richtung liegt, verkleinert. Entsprechend verkleinert sich der axiale Abstand einer solchen Auflaufschräge eines Spannelements zu einer Gegenstirnfläche des Dichtungsträgers bei einer Verdrehung des Spannelements in Umfangsrichtung um die Rotationsachse, so dass eine solche Verdrehung das Spannelement zunehmend axial verspannt. Insbesondere kann eine Auflaufschräge eines Spannelements gegen die axiale Richtung durch eine Fase mit kreisförmigem Querschnitt gebildet sein.

Eine oder mehrere der oben genannten Stirnflächen, insbesondere ein Innenring- und/oder Dichtungsträgerstirnfläche, eine Spannelement-Stirnfläche und/oder eine Gegenstirnfläche weist vorzugsweise eine Normalfläche zur axialen Richtung auf und ist bevorzugt eine Normalfläche zur axialen Richtung.

In einer Ausführung weist der Dichtungsträger, insbesondere zur radialen Befestigung zwei einander gegenüberliegende, insbesondere parallele, Dichtungsträger-Umfangsflächen auf. Der Innenring weist zwei Innenring-Umfangsflächen auf, die diesen Dichtungsträger-Umfangsflächen zugewandt sind.

In einer Ausführung sind die Dichtungsträger-Umfangsflächen zwischen den Innenring-Umfangsflächen mit einem Radialspalt aufgenommen. In einer anderen Ausführung sind umgekehrt die Innenring-Umfangsflächen zwischen den Dichtungsträger-Umfangsflächen mit einem Radialspalt aufgenommen.

Insbesondere kann eine Innenring-Umfangsfläche an einer Dichtungsträger-Umfangsfläche anliegen und die andere Innenring-Umfangsfläche der anderen Dichtungsträger-Umfangsfläche radial gegenüberliegen und von dieser durch den Radialspalt beabstandet sein.

Insbesondere, um den Dichtungsträger radial spielfrei an dem Innenring zu befestigen, sind ein oder mehrere, vorzugsweise über den Umfang, insbesondere äquidistant, verteilte Spannelemente zwischen Innenring und Dichtungsträger radial elastisch verspannt.

Zur axial und zur radial spielfreien Befestigung können erste Spannelemente axial und hiervon verschiedene zweite Spannelemente radial elastisch zwischen Innenring und Dichtungsträger verspannt sein. In einer bevorzugten Ausführung sind jedoch ein oder mehrere Spannelemente zur axial und radial spielfreien Befestigung axial und radial elastisch zwischen Innenring und Dichtungsträger verspannt. Die Spannelemente nach dem zweiten Aspekt können also insbesondere zugleich Spannelemente sein, wie sie vorstehend mit Bezug auf den ersten Aspekt erläutert wurden.

Zur radial spielfreien Befestigung bzw. radialen elastischen Verspannung stützen sich das bzw. die Spannelemente vorzugsweise an einer Gegenumfangsfläche des Innenring, insbesondere in einer Aussparung in einer Innenring-Umfangsfläche, mit einer ersten Spannelement-Umfangsfläche und an einer Gegenumfangsfläche des Dichtungsträgers, insbesondere einer Dichtungsträger-Umfangsfläche, mit einer zweiten Spannelement-Umfangsfläche radial ab.

Vorzugsweise ist die Summe des, insbesondere maximalen, radialen Abstands zwischen diesen beiden Spannelement-Umfangsfläche des unverformten bzw. nicht verspannten Spannelements und des, insbesondere maximalen, radialen Abstands zwischen der zweiten Spannelement-Umfangsfläche und der der Gegenumfangsfläche des Dichtungsträgers abgewandten Innenring-Umfangsfläche kleiner als der, insbesondere maximale, radiale Abstand zwischen den beiden Dichtungsträger-Umfangsflächen.

Wenn also in einer bevorzugten Ausführung ein Spannelement teilweise in einer Aussparung in einer Innenring-Umfangsfläche aufgenommen ist und sich in dieser radial abstützt, wobei diese Aussparung eine Gegenumfangsfläche des Innenrings definiert, so ragt das unverformte bzw. nicht verspannte Spannelement um mehr als das Radialspiel aus dieser Aussparung über die Innenring-Umfangsfläche hervor und wird elastisch in radialer Richtung komprimiert, wenn die Dichtungsträger-Umfangsflächen zwischen den Innenring-Umfangsflächen des Innenrings mit eingesetztem Spannelement aufgenommen sind. Entsprechendes gilt analog, wenn in einer anderen Ausführung die Innenring-Umfangsflächen zwischen den Dichtungsträger-Umfangsflächen mit einem Radialspalt aufgenommen sind.

In einer Ausführung weisen ein oder mehrere Spannelement-Umfangsflächen jeweils eine Auflaufschräge gegen die radiale Richtung auf. Unter einer Anlaufschräge gegen die radiale Richtung wird insbesondere eine Fläche verstanden, deren radialer Abstand zur axialen Richtung in Umfangsrichtung zunimmt, so dass eine Verdrehung der Auflaufschräge in Umfangsrichtung um die Rotationsachse ihren radialen Abstand in einer Ebene, in der die axiale Richtung liegt, verkleinert. Entsprechend verkleinert sich der radiale Abstand einer solchen Auflaufschräge eines Spannelements zu einer Gegenumfangsfläche des Dichtungsträgers bei einer Verdrehung des Spannelements in Umfangsrichtung um die Rotationsachse, so dass eine solche Verdrehung das Spannelement zunehmend radial verspannt. Insbesondere kann eine Auflaufschräge eines Spannelements gegen die radiale Richtung durch einen kreissegmentförmigem Querschnitt gebildet sein, der weniger als 180° aufweist.

Eine oder mehrere der oben genannten Umfangsflächen, insbesondere ein Innenring- und/oder Dichtungsträgerumfangsfläche, eine Spannelement-Umfangsfläche und/oder eine Gegenumfangsfläche weist vorzugsweise eine ebene und/oder eine gekrümmte Fläche auf und weist bevorzugt in einem Normalschnitt zur axialen Richtung eine kreissegmentförmige Außenkontur auf.

In einer Ausführung der vorliegenden Erfindung sind ein oder mehrere Spannelemente jeweils teilweise, insbesondere über einen Teilbereich ihrer axialen Länge und/oder einen Teilbereich ihres Umfangs, in einer, insbesondere einseitig offenen bzw. sacklochartigen Aussparung einer Innenring-Stirn- und/oder Umfangsfläche aufgenommen.

In einer Ausführung der vorliegenden Erfindung ist der Dichtungsträger in einer gegenüber einer Montagestellung verdrehten Stellung an dem Innenring befestigt, wobei eine Dichtungsträger-Stirnfläche eine oder mehrere Durchgangsöffnungen zum Einführen je wenigstens eines Spannelements in eine Aussparung aufweist, die in der Montagestellung mit der Durchgangsöffnung fluchtet und in der verdrehten Stellung durch die Dichtungsträger-Stirnfläche verschlossen sind.

In einer Ausführung der vorliegenden Erfindung weisen ein oder mehrere Spannelemente einen oder mehrere Absätze auf. Ein solcher Absatz kann insbesondere zwischen zwei axial beabstandeten Querschnitten definiert sein, die unterschiedliche radiale Abmessungen und/oder Abstände zur Rotationsachse aufweisen.

In einer Ausführung der vorliegenden Erfindung weisen ein oder mehrere Spannelemente einen oder mehrere kreisförmigen und/oder rechteckige Querschnitte auf.

Gemäß einem weiteren Aspekt der vorliegenden Erfindung werden ein oder mehrere Spannelemente zwischen Dichtungsträgers und Innenring elastisch verspannt, wenn der Dichtungsträger an dem Innenring befestigt wird. Insbesondere können das bzw. die Spannelement in einer Montagestellung durch Durchgangsöffnungen in einer Dichtungsträger-Stirnfläche teilweise in Aussparungen einer Innenring-Stirnfläche eingeführt und anschließend Dichtungsträger und Innenring gegeneinander verdreht und aneinander befestigt werden, wodurch das bzw. die Spannelement zwischen Dichtungsträgers und Innenring radial und/oder axial elastisch verspannt werden.

Weitere Vorteile und Merkmale ergeben sich aus den Unteransprüchen und den Ausführungsbeispielen. Hierzu zeigt, teilweise schematisiert:
- Fig. 1:: einen Teil eines Leitgitters eines Verdichters nach einer Ausführung der vorliegenden Erfindung in einer Montagestellung in perspektivischer Darstellung;
- Fig. 2:: den Teil des Leitgitters der Fig. 1 in einer gegenüber der Montagestellung verdrehten Endstellung, in der ein Dichtungsträger und ein Innenring aneinander befestigt sind;
- Fig. 3:: ein Spannelement des Leitgitters der Fig. 1 in einer Seitansicht;
- Fig. 4:: einen Teil eines Leitgitters eines Verdichters nach einer weiteren Ausführung der vorliegenden Erfindung in Fig. 1 entsprechender Darstellung;
- Fig. 5:: den Teil des Leitgitters der Fig. 4 in einer gegenüber der Montagestellung verdrehten Endstellung, in der ein Dichtungsträger und ein Innenring aneinander befestigt sind;
- Fig. 6:: ein Spannelement des Leitgitters der Fig. 4 in einer Seitansicht;
- Fig. 7:: einen Teil eines Leitgitters eines Verdichters nach einer weiteren Ausführung der vorliegenden Erfindung in Fig. 1 entsprechender Darstellung;
- Fig. 8:: ein Spannelement des Leitgitters der Fig. 7 in perspektivischer Ansicht;
- Fig. 9:: einen Teil eines Leitgitters eines Verdichters nach einer weiteren Ausführung der vorliegenden Erfindung in Fig. 4 entsprechender Darstellung;
- Fig. 10:: den Teil des Leitgitters der Fig. 9 in einer gegenüber der Montagestellung verdrehten Endstellung, in der ein Dichtungsträger und ein Innenring aneinander befestigt sind;
- Fig. 11:: ein Spannelement des Leitgitters der Fig. 1 in perspektivischer Ansicht;
- Fig. 12:: den Teil des Leitgitters des Verdichters in perspektivischer Ansicht;
- Fig. 13:: den Teil des Leitgitters des Verdichters gemäß Fig. 5 in perspektivischer Ansicht; und
- Fig. 14:: den Teil des Leitgitters gemäß Fig. 10, in perspektivischer Ansicht.

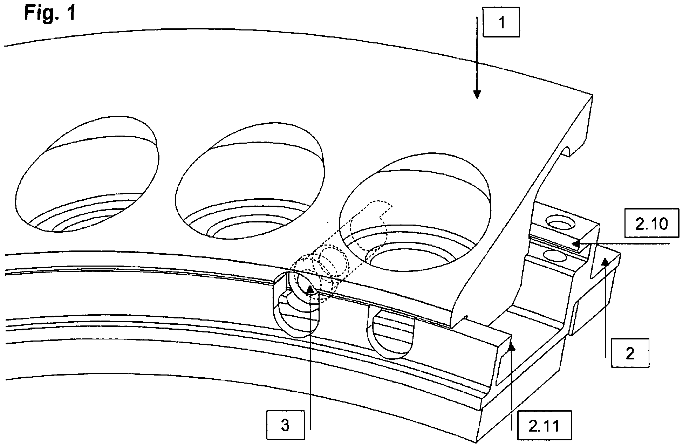

Fig. 1 zeigt einen Teil eines Leitgitters eines Verdichters nach einer Ausführung der vorliegenden Erfindung in perspektivischer Darstellung mit einem Innenring 1 und einem Dichtungsträger 2 in einer Montagestellung.

Der Dichtungsträger weist zwei einander gegenüberliegende parallele Dichtungsträger-Stirnflächen 2.10, 2.11 auf. Der Innenring weist zwei Innenring-Stirnflächen 1.10, 1.11 auf, die diesen Dichtungsträger-Stirnflächen zugewandt und zwischen den Dichtungsträger-Stirnflächen mit einem Axialspalt aufgenommen sind.

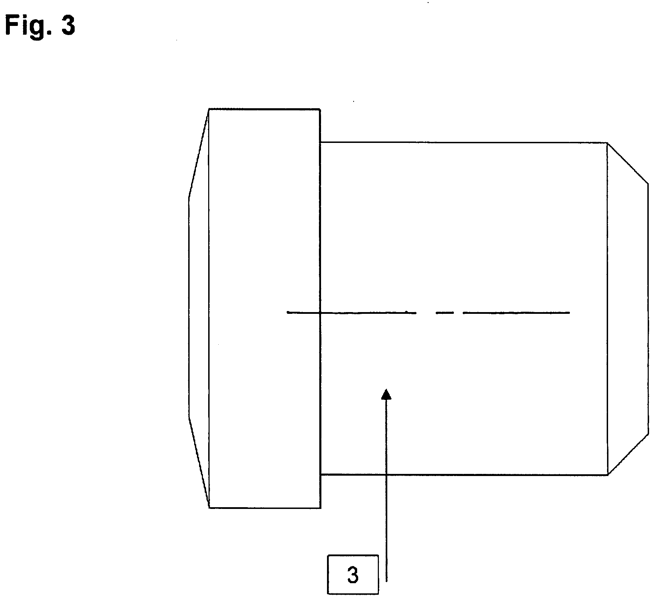

Über den Umfang verteilt sind mehrere baugleiche Spannelemente über einen Teilbereich ihrer axialen Länge in einseitig offenen bzw. sacklochartigen Aussparung der Innenring-Stirnfläche 1.11 aufgenommen, von denen in Fig. 1 nur ein Spannelement 3 dargestellt ist. Es weist, wie insbesondere in Fig. 3 erkennbar, einen axialen Abschnitt mit einem größeren Kreisquerschnitt auf, der in einem Absatz in einen weiteren axialen Abschnitt mit einem kleineren Kreisquerschnitt übergeht. Auf den dem Absatz abgewandten Stirnseiten weisen diese Abschnitte jeweils eine Fase auf. Die entsprechende Aussparung weist entsprechende axiale Abschnitte mit entsprechenden Kreisquerschnitten auf, so dass das Spannelement, vorzugsweise mit geringem radialen Spiel, axial in die Aussparungen eingeführt werden kann und dann mit dem Absatz und/oder der kleineren Stirnseite an einem Absatz bzw. dem Boden der Aussparung anliegt. Um die Spannelemente einzuführen, weist die Dichtungsträger-Stirnseite 2.11 entsprechende Durchgangsöffnungen auf, die in der in Fig. 1 dargestellten Montagestellung mit den Aussparungen fluchten.

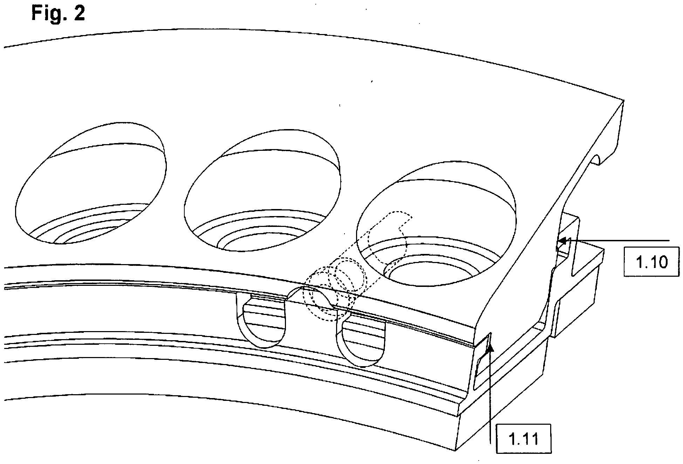

Zur Montage wird zunächst der Dichtungsträger in der in Fig. 1 dargestellten Montagestellung an dem Innenring befestigt und die Spannelemente eingeführt. Dann werden Dichtungsträger und Innenring gegeneinander in die in Fig. 2 dargestellte Endstellung verdreht und hierdurch die Spannelemente zwischen Innenring und Dichtungsträger axial elastisch verspannt.

Hierzu stützen sich die Spannelemente an dem Absatz bzw. dem Boden der Aussparung in der Innenring-Stirnfläche 1.11, die eine Gegenstirnfläche des Innenring bildet, mit ihrem Absatz bzw. ihrer kleineren Stirnseite, die eine erste Spannelement-Stirnfläche bildet, und der Dichtungsträger-Stirnfläche 2.11, die eine Gegenstirnfläche des Dichtungsträgers bildet, mit ihrer größeren Stirnseite axial ab, die eine zweite Spannelement-Stirnfläche. Dabei ist die Summe des maximalen axialen Abstands zwischen diesen beiden Spannelement-Stirnfläche des unverformten bzw. nicht verspannten Spannelements, d.h. die maximale axiale Länge des Spannelements 3, und des maximalen, axialen Abstands zwischen der Gegenstirnfläche des Innenrings und der der Gegenstirnfläche 2.11 des Dichtungsträgers ferneren Innenring-Stirnfläche 1.10 größer als der maximale axiale Abstand zwischen den beiden Dichtungsträger-Stirnflächen 2.10, 2.11, so dass das unverformte bzw. nicht verspannte Spannelement um mehr als das Axialspiel aus dieser Aussparung über die Innenring-Stirnfläche 1.11 hervorragt und elastisch in axialer Richtung komprimiert wird, wenn Innenring und Dichtungsträger gegeneinander in die in Fig. 2 dargestellte Endstellung verdreht werden.

Dabei bildet die Fase des größeren Stirnquerschnitts (links in Fig. 3) des Spannelements eine Auflaufschräge gegen die axiale Richtung. Eine Verdrehung dieser Auflaufschräge in Umfangsrichtung um die Rotationsachse verkleinert ihren axialen Abstand zu der Dichtungsträger-Gegenstirnfläche 2.11, so dass eine solche Verdrehung das Spannelement zunehmend axial verspannt.

Um den Dichtungsträger zu demontieren bzw. axial zu lösen, werden umgekehrt Innenring und Dichtungsträger gegeneinander in die in Fig. 1 dargestellte Montagestellung verdreht, bis die Durchgangsöffnungen und die Aussparungen in der Innenring-Stirnseite 1.11 fluchten, so dass sich die Spannelemente 3 durch die Durchgangsöffnungen entspannen und entfernt werden können.

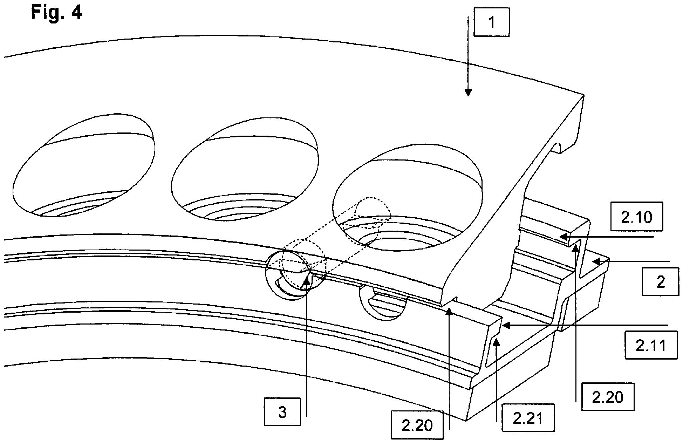

Fig. 4 bis 6 zeigen in Fig. 1 bis 3 entsprechender Weise einen Teil eines Leitgitters eines Verdichters bzw. ein Spannelement nach einer weiteren Ausführung der vorliegenden Erfindung. Einander entsprechende Bauteile sind durch identische Bezugszeichen bezeichnet, so dass nachfolgend nur auf die Unterschiede eingegangen und im Übrigen auf die obige bzw. nachfolgende Beschreibung verwiesen wird.

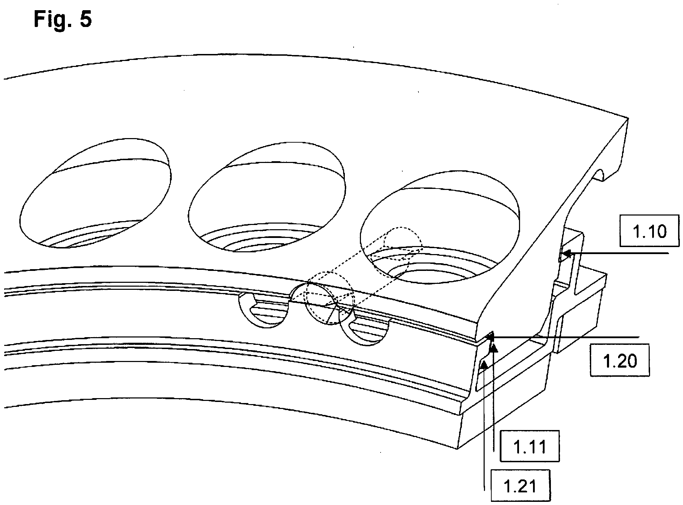

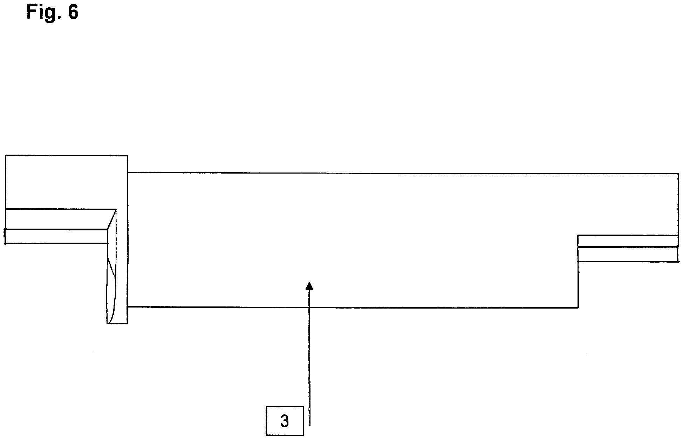

Die axial spielfreie Befestigung erfolgt wie vorstehend beschrieben dadurch, dass die Spannelemente 3 im unverformten Zustand aufgrund der Abstützung ihres in Fig. 6 linken Absatzes an einem entsprechenden Absatz der Aussparung in der Innenring-Stirnfläche 1.11 über diese in die Durchgangsöffnungen in der Dichtungsträger-Stirnfläche 2.11 hervorstehen und bei Verdrehung von Innenring und Dichtungsträger gegeneinander aus der in Fig. 4 gezeigten Montage- in die in Fig. 5 dargestellte Endstellung axial elastisch verspannt werden.

Zur radialen Befestigung weist der Dichtungsträger wie bei der Ausführung der Fig. 1 bis 3 zwei einander gegenüberliegende parallele Dichtungsträger-Umfangsflächen 2.20, 2.21 auf. Der Innenring weist zwei Innenring-Umfangsflächen 1.20, 1.21 auf, die diesen Dichtungsträger-Umfangsflächen zugewandt sind. In der Ausführung der Fig. 4 bis 6 sind die Dichtungsträger-Umfangsflächen zwischen den Innenring-Umfangsflächen mit einem Radialspalt aufgenommen. In einer anderen Ausführung, beispielsweise gemäß der WO 2007/134585 A1, können umgekehrt die Innenring-Umfangsflächen zwischen den Dichtungsträger-Umfangsflächen mit einem Radialspalt aufgenommen sein.

Um den Dichtungsträger radial spielfrei an dem Innenring zu befestigen, die Spannelemente 3 zwischen Innenring und Dichtungsträger auch radial elastisch verspannt.

Hierzu stützen sich die Spannelemente mit einer ersten Spannelement-Umfangsfläche, die im Ausführungsbeispiel von der oberen Umfangsfläche des in Fig. 6 linken und/oder rechten Endabschnitts mit kreissegmentförmigem Querschnitt gebildet sind, an einer Gegenumfangsfläche des Innenring ab, die im Ausführungsbeispiel von einer entsprechenden kreissegmentförmigen Aussparung in der Innenring-Umfangsfläche 1.20 gebildet ist, und mit einer zweiten Spannelement-Umfangsfläche, die im Ausführungsbeispiel von der unteren Umfangsfläche des in Fig. 6 linken und/oder rechten Endabschnitts mit kreissegmentförmigem Querschnitt gebildet sind, an einer Gegenumfangsfläche des Dichtungsträgers radial ab, die im Ausführungsbeispiel von der Dichtungsträger-Umfangsfläche 2.20 gebildet ist.

Wie insbesondere in Fig. 4 erkennbar, weisen die linken und/oder rechten Endabschnitte der Spannelemente 3 einen kreissegmentförmigem Querschnitt auf, der weniger als 180° aufweist. Die Sekante dieses Querschnitts weist eine Fase (rechts in Fig. 4) auf, die eine Auflaufschräge gegen die radiale Richtung bildet.

Analog zu der axial spielfreien Befestigung ragt die zweite Spannelement-Umfangsfläche, die durch diese Sekante gebildet wird, bei unverformtem bzw. nicht verspanntem Spannelement in der Montagestellung (vgl. Fig. 4) über die Innenring-Stirnfläche 1.21 radial hervor. Werden Innenring und Dichtungsträger in die Endstellung (Fig. 5) verdreht, gleitet die Auflaufschräge gegen die radiale Richtung auf der Gegenumfangsfläche des Dichtungsträgers 2.20 auf und das Spannelement 3 bzw. seine in Fig. 6 linken und/oder rechten Endabschnitte werden radial elastisch verspannt.

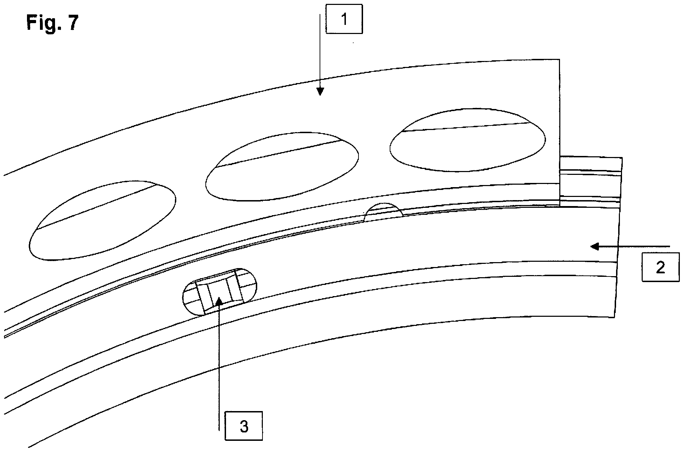

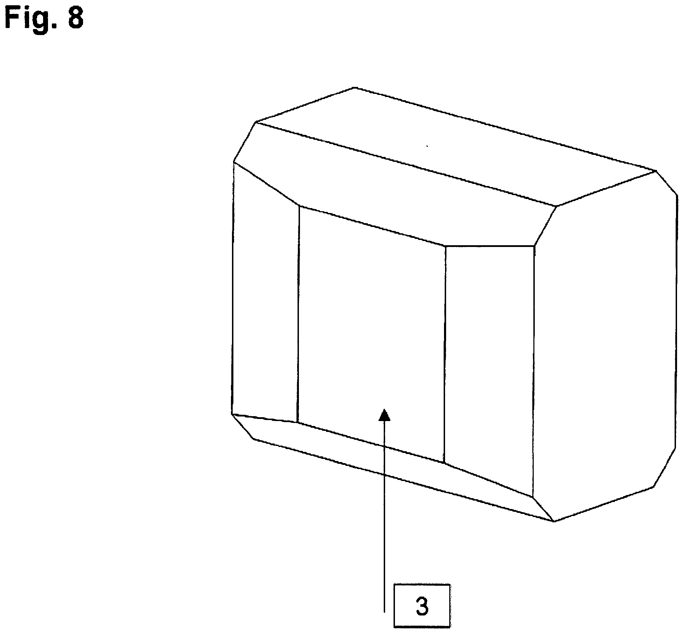

Fig. 7, 8 zeigen in Fig. 1, 3 entsprechender Weise einen Teil eines Leitgitters eines Verdichters bzw. ein Spannelement nach einer weiteren Ausführung der vorliegenden Erfindung. Einander entsprechende Bauteile sind durch identische Bezugszeichen bezeichnet, so dass nachfolgend nur auf die Unterschiede eingegangen und im Übrigen auf die obige bzw. nachfolgende Beschreibung verwiesen wird.

Die Spannelemente 3 dieser Ausführung weisen, wie insbesondere in Fig. 8 erkennbar, einen rechteckigen Querschnitt in einer Normalebene zur axialen Richtung auf. Auf diese Weise können sie verdrehsicher in entsprechenden Aussparungen im Innenring aufgenommen werden, die Durchgangsöffnungen im Dichtungsträger sind entsprechend geformt, um ein Einführen der quaderförmigen Spannelemente in diese Aussparungen zu gestatten. Im Übrigen entsprechend Aufbau und Funktion dem Ausführungsbeispiel der Fig. 1 bis 3.

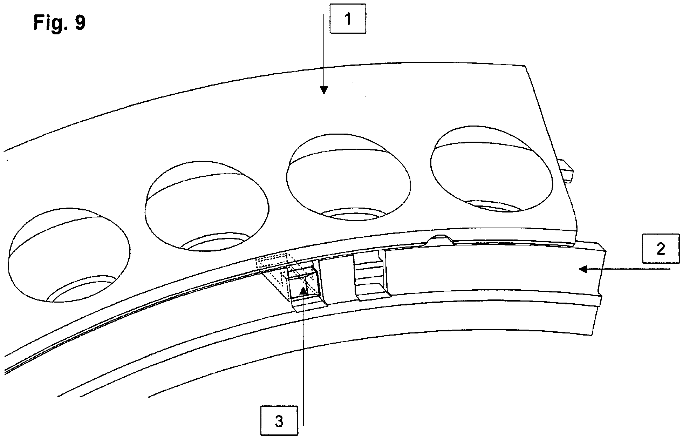

Fig. 9 bis 11 zeigen in Fig. 4 bis 6 entsprechender Weise einen Teil eines Leitgitters eines Verdichters bzw. ein Spannelement nach einer weiteren Ausführung der vorliegenden Erfindung. Einander entsprechende Bauteile sind durch identische Bezugszeichen bezeichnet, so dass nachfolgend nur auf die Unterschiede eingegangen und im Übrigen auf die obige Beschreibung verwiesen wird.

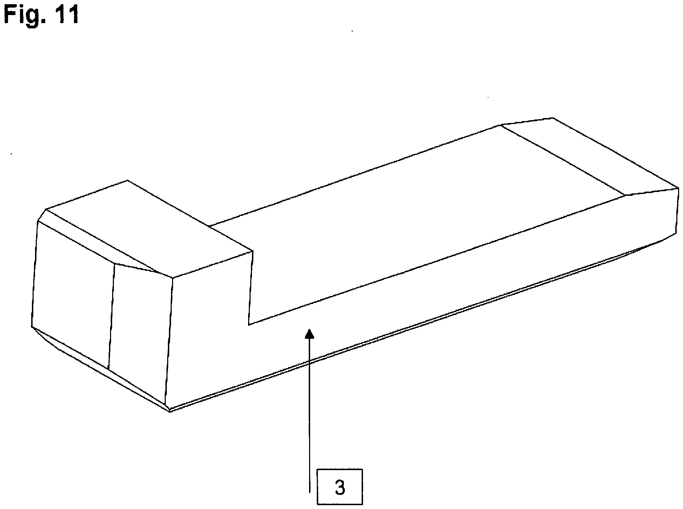

Die Spannelemente 3 dieser Ausführung weisen, wie insbesondere in Fig. 11 erkennbar, rechteckige Querschnitte auf wie vorstehend mit Bezug auf Fig. 8 erläutert. Wie mit Bezug auf Fig. 6 erläutert, weisen sie zudem einen Absatz auf, in dem ein größerer Querschnitt in einen kleineren Querschnitt übergeht. Fasen in axialer und radialer Richtung an der größeren Stirnseite (links in Fig. 11) und in radialer Richtung an der kleineren Stirnseite (rechts in Fig. 11) bilden Auflaufschräge gegen die axiale bzw. radiale Richtung.

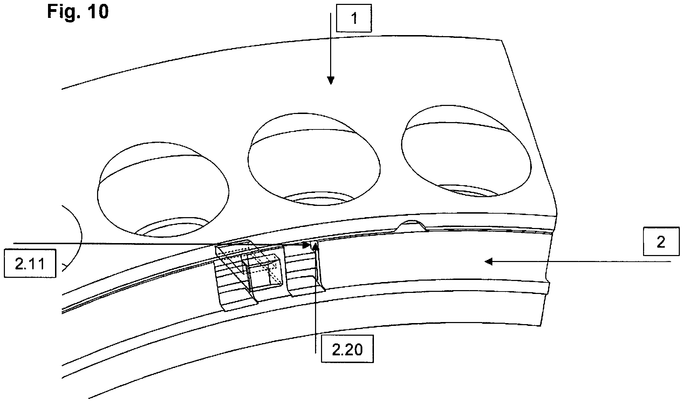

In der Montagestellung (Fig. 9) werden die im Wesentlichen L-förmigen Spannelemente 3 durch die Durchgangsöffnungen im Dichtungsträger 2 in entsprechend geformte Aussparungen im Innenring 1 eingeführt und stützen sich dort derart ab, dass sie im unverformten Zustand in axialer Richtung über eine Innenring-Stirnfläche axial und eine Innenring-Umfangsfläche in radialer Richtung hervorstehen. Bei Verdrehung in die Endstellung (Fig. 10) werden sie durch die Dichtungsträger-Stirnfläche bzw. Gegenstirnfläche 2.11 des Dichtungsträgers 2 in axialer Richtung und durch die Dichtungsträger-Umfangsfläche bzw. Gegenumfangsfläche 2.20 des Dichtungsträgers 2 in radialer Richtung elastisch verspannt. Insofern entsprechend Aufbau und Funktion insbesondere dem Ausführungsbeispiel der Fig. 4 bis 6.

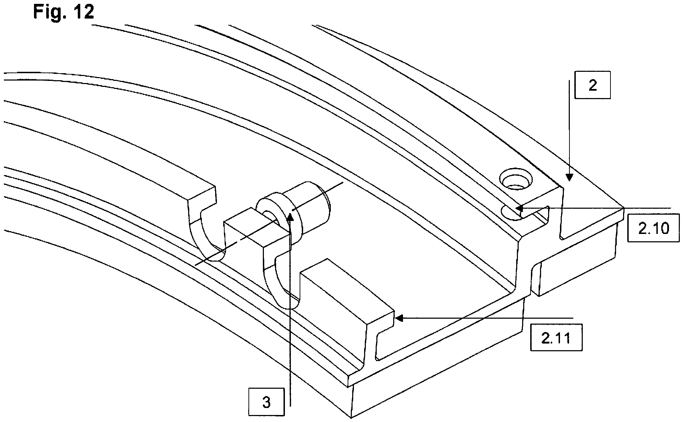

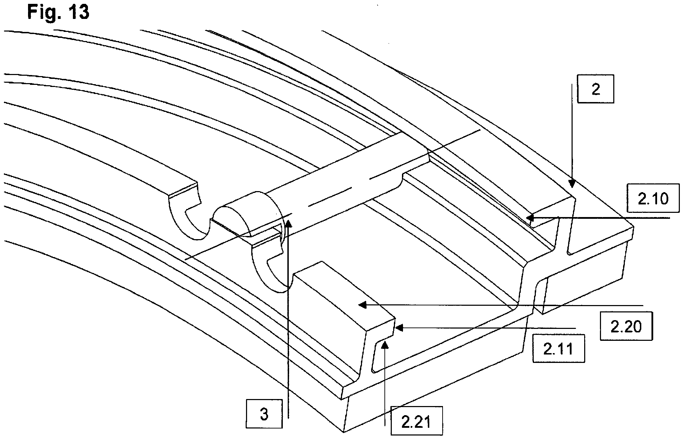

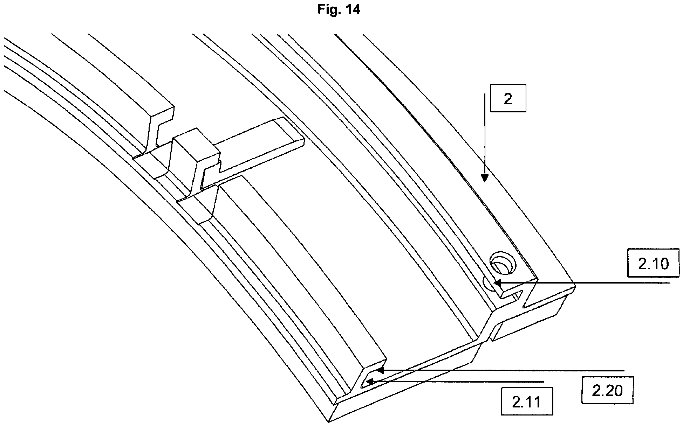

Fig. 12 zeigt nochmals den Teil des Leitgitters des Verdichters gemäß Fig. 1 in der gegenüber der Montagestellung verdrehten Endstellung, Fig. 13 entsprechend nochmals den Teil des Leitgitters des Verdichters gemäß Fig. 5, Fig. 14 den Teil des Leitgitters gemäß Fig. 10, wobei zur Verdeutlichung jeweils der Innenring weggelassen ist.

### Bezugszeichenliste

- 1: Innenring
- 1.10, 1.11: Innenring-Stirnfläche
- 1.20, 1.21: Innenring-Umfangsfläche
- 2: Dichtungsträger
- 2.10, 2.11: Dichtungsträger-Stirnfläche
- 2.20, 2.21: Dichtungsträger-Umfangsfläche
- 3: Spannelement

## Patentansprüche

1. Verdichter, insbesondere für ein Flugtriebwerk, mit einem Leitgitter mit einem Innenring (1), einem daran befestigten Dichtungsträger (2) und einem Spannelement (3), wobei der Dichtungsträger zwei einander gegenüberliegende Dichtungsträger-Stirnflächen (2.10, 2.11) und der Innenring zwei diesen Dichtungsträger-Stirnflächen zugewandte Innenring-Stirnflächen (1.10, 1.11) aufweist, die zwischen den Dichtungsträger-Stirnflächen mit einem Axialspalt aufgenommen sind, und wobei das Spannelement sich an dem Innenring mit einer ersten Spannelement-Stirnfläche und an dem Dichtungsträger mit einer zweiten Spannelement-Stirnfläche axial abstützt und zwischen Innenring und Dichtungsträger axial elastisch verspannt ist,
**dadurch gekennzeichnet, dass** eine Spannelement-Stirnfläche eine Auflaufschräge gegen die axiale Richtung aufweist.

2. Verdichter nach Anspruch 1, wobei der Dichtungsträger zwei einander gegenüberliegende Dichtungsträger-Umfangsflächen (2.20, 2.21) und der Innenring zwei diesen Dichtungsträger-Umfangsflächen zugewandte Innenring-Umfangsflächen (1.20, 1.21) aufweist, wobei die einen von den Dichtungsträger-Umfangsflächen und den Innenring-Umfangsflächen zwischen den anderen von den Dichtungsträger-Umfangsflächen und den Innenring-Umfangsflächen mit einem Radialspalt aufgenommen sind, und wobei das Spannelement (3) sich an dem Innenring mit einer ersten Spannelement-Umfangsfläche und an dem Dichtungsträger mit einer zweiten Spannelement-Umfangsfläche radial abstützt und zwischen Innenring und Dichtungsträger radial elastisch verspannt ist.

3. Verdichter nach Anspruch 2, **dadurch gekennzeichnet, dass** eine Spannelement-Umfangsfläche eine Auflaufschräge gegen die radiale Richtung aufweist.

4. Verdichter nach einem der vorhergehenden Ansprüche, **dadurch gekennzeichnet, dass** das Spannelement teilweise in einer Aussparung einer Innenring-Stirn- und/oder Umfangsfläche aufgenommen ist.

5. Verdichter nach dem vorhergehenden Anspruch, **dadurch gekennzeichnet, dass** der Dichtungsträger in einer gegenüber einer Montagestellung verdrehten Stellung an dem Innenring befestigt ist, und dass eine Dichtungsträger-Stirnfläche eine Durchgangsöffnung zum Einführen des Spannelements in die Aussparung aufweist, die in der Montagestellung mit der Durchgangsöffnung fluchtet.

6. Verdichter nach einem der vorhergehenden Ansprüche, **dadurch gekennzeichnet, dass** das Spannelement einen Absatz aufweist.

7. Verdichter nach einem der vorhergehenden Ansprüche, **dadurch gekennzeichnet, dass** das Spannelement einen kreisförmigen oder rechteckigen Querschnitt aufweist.

8. Verfahren zum Befestigen des Dichtungsträgers (2) an dem Innenring (1) eines Verdichters nach einem der vorhergehenden Ansprüche, **dadurch gekennzeichnet, dass** das Spannelement (3) zwischen Dichtungsträgers und Innenring elastisch verspannt wird.

9. Verfahren nach dem vorhergehenden Anspruch, **dadurch gekennzeichnet, dass** das Spannelement in einer Montagestellung durch eine Durchgangsöffnung in einer Dichtungsträger-Stirnfläche teilweise in eine Aussparung einer Innenring-Stirnfläche eingeführt und anschließend Dichtungsträger und Innenring gegeneinander verdreht und aneinander befestigt werden, wodurch das Spannelement zwischen Dichtungsträgers und Innenring elastisch verspannt wird.

## Claims

1. A compressor, in particular for an aircraft engine, comprising a stator vane assembly comprising an inner ring (1), a seal carrier (2) attached thereto and a biasing element (3), wherein the seal carrier comprises two opposing seal carrier end faces (2.10, 2.11) and the inner ring comprises two inner ring end faces (1.10, 1.11) facing said seal carrier end faces, said inner ring end faces being received between the seal carrier end faces with an axial gap therebetween, and wherein the biasing element bears axially against the inner ring with a first biasing element end face, and the biasing element bears axially against the seal carrier with a second biasing element end face, and the biasing element is axially elastically biased between the inner ring and the seal carrier,
**characterized in that** a biasing element end face comprises an entry ramp against the axial direction.

2. The compressor according to claim 1, wherein the seal carrier comprises two opposing seal carrier circumferential faces (2.20, 2.21) and the inner ring comprises two inner ring circumferential faces (1.20, 1.21) facing said seal carrier circumferential faces, wherein the seal carrier circumferential faces are received between the inner ring circumferential faces with a radial gap therebetween or the inner ring circumferential faces are received between the seal carrier circumferential faces with a radial gap therebetween, and wherein the biasing element (3) bears radially against the inner ring with a first biasing element circumferential face and against the seal carrier with a second biasing element circumferential face and the biasing element is radially elastically biased between the inner ring and the seal carrier.

3. The compressor according to claim 2, **characterized in that** a biasing element circumferential face comprises an entry ramp against the radial direction.

4. The compressor according to any one of the preceding claims, **characterized in that** the biasing element is partially received in a recess of an inner ring end face and/or inner ring circumferential face.

5. The compressor according to the preceding claim, **characterized in that** the seal carrier is attached to the inner ring in a position rotated with respect to an installation position, and **in that** a seal carrier end face comprises a through-hole for inserting the biasing element into the recess, said recess being aligned with the through-hole in the installation position.

6. The compressor according to any one of the preceding claims, **characterized in that** the biasing element comprises a shoulder.

7. The compressor according to any one of the preceding claims, **characterized in that** the biasing element comprises a circular or rectangular cross section.

8. A method of attaching the seal carrier (2) to the inner ring (1) of a compressor according to any one of the preceding claims, **characterized in that** the biasing element (3) is elastically biased between the seal carrier and the inner ring.

9. The method according to the preceding claim, **characterized in that** in an installation position, the biasing element is inserted partially into a recess of an inner ring end face through a through-hole in a seal carrier end face and subsequently the seal carrier and the inner ring are rotated with respect to each other and attached to each other, whereby the biasing element is elastically biased between the seal carrier and the inner ring.

## Revendications

1. Compresseur, en particulier pour un groupe motopropulseur, avec une grille de guidage avec un anneau intérieur (1), un support de joint (2) fixé dessus et un élément de serrage (3), dans lequel le support de joint présente deux surfaces avant de support de joint (2.10, 2.11) opposées l'une à l'autre et l'anneau intérieur présente deux surfaces avant d'anneau intérieur (1.10, 1.11) tournées vers ces surfaces avant de support de joint qui sont reçues entre les surfaces avant de support de joint avec une fente axiale, et dans lequel l'élément de serrage s'appuie axialement contre l'anneau intérieur avec une première surface avant d'élément de serrage et contre le support de joint avec une seconde surface avant d'élément de serrage et est serré axialement élastiquement entre l'anneau intérieur et le support de joint,
**caractérisé en ce qu'**une surface avant d'élément de serrage présente un biais d'entrée à l'inverse de la direction axiale.

2. Compresseur selon la revendication 1, dans lequel le support de joint présente deux surfaces périphériques de support de joint (2.20, 2.21) opposées l'une à l'autre et l'anneau intérieur présente deux surfaces périphériques d'anneau intérieur (1.20, 1.21) tournées vers ces surfaces périphériques de support de joint, dans lequel l'une des surfaces périphériques de support de joint et des surfaces périphériques d'anneau intérieur sont reçues entre les autres des surfaces périphériques de support de joint et des surfaces périphérique d'anneau intérieur avec une fente radiale, et dans lequel l'élément de serrage (3) s'appuie radialement contre l'anneau intérieur avec une première surface périphérique d'élément de serrage et contre le support de joint avec une seconde surface périphérique d'élément de serrage et est serré radialement élastiquement entre l'anneau intérieur et le support de joint.

3. Compresseur selon la revendication 2, **caractérisé en ce qu'**une surface périphérique d'élément de serrage présente une pente inclinée à l'inverse du sens radial.

4. Compresseur selon l'une des revendications précédentes, **caractérisé en ce que** l'élément de serrage est reçu partiellement dans un évidement d'une surface avant, et/ou périphérique, d'anneau intérieur.

5. Compresseur selon la revendication précédente, **caractérisé en ce que** le support de joint est fixé dans une position tournée par rapport à une position de montage sur l'anneau intérieur, et **en ce qu'**une surface avant de support de joint présente une ouverture débouchante pour l'introduction de l'élément de serrage dans l'évidement qui s'aligne dans la position de montage sur l'ouverture débouchante.

6. Compresseur selon l'une des revendications précédentes, **caractérisé en ce que** l'élément de serrage présente un épaulement.

7. Compresseur selon l'une des revendications précédentes, **caractérisé en ce que** l'élément de serrage présente une section transversale circulaire ou rectangulaire.

8. Procédé de fixation du support de joint (2) sur l'anneau intérieur (1) d'un compresseur selon l'une des revendications précédentes, **caractérisé en ce que** l'élément de serrage (3) est serré élastiquement entre le support de joint et l'anneau intérieur.

9. Procédé selon la revendication précédente, **caractérisé en ce que** l'élément de serrage est introduit dans une position de montage par une ouverture débouchante dans une surface avant de support de joint partiellement dans un évidement d'une surface avant d'anneau intérieur et ensuite le support de joint et l'anneau intérieur sont tournés l'un contre l'autre et sont fixés l'un par rapport à l'autre, moyennant quoi l'élément de serrage est serré élastiquement entre le support de joint et l'anneau intérieur.
